(19) Europäisches Patentamt
European Patent Office
Office européen des brevets

(11) **EP 2 076 335 B1**

(12) **EUROPEAN PATENT SPECIFICATION**

(45) Date of publication and mention
of the grant of the patent:
**29.04.2015 Bulletin 2015/18**

(51) Int Cl.:
***B04C 5/10*** *(2006.01)*  ***B04C 5/103*** *(2006.01)*
***B04C 5/23*** *(2006.01)*

(21) Application number: **07805540.7**

(86) International application number:
**PCT/IL2007/001080**

(22) Date of filing: **02.09.2007**

(87) International publication number:
**WO 2008/035326 (27.03.2008 Gazette 2008/13)**

(54) **VORTEX CYCLONE SEPARATOR WITH AQUEOUS STREAM INJECTORS**

ZYKLONABSCHEIDER MIT BENETZUNGSEINSPRITZDÜSEN

SÉPARATEUR CYCLONE À VORTEX AVEC INJECTEURS D'ÉCOULEMENT AQUEUX

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **21.09.2006 IL 17823406**

(43) Date of publication of application:
**08.07.2009 Bulletin 2009/28**

(73) Proprietor: **Vortex Ecological Technologies Ltd.**
**26110 Haifa (IL)**

(72) Inventors:
• **FICHMAN, Matitiahu**
**34670 Haifa (IL)**

• **HAREL, Avi**
**45512 Hod Hasaron (IL)**
• **YAVIN, Mordechai**
**34984 Haifa (IL)**

(74) Representative: **Petruzziello, Aldo et al**
**Racheli S.r.l.**
**Viale San Michele del Carso, 4**
**20144 Milano (IT)**

(56) References cited:
**EP-A- 1 498 172        EP-A- 1 683 463
DE-B3-102004 038 474    DE-U1- 29 813 282
US-A- 6 146 525**

**Description**

The present invention relates to cyclone units for use in separating contaminants from flue gases.

More specifically, the present invention refers to cyclone units for use in separating gaseous contaminants such as sulfur dioxide, NOx, $CO_2$ and solid contaminants from flue gases and to processes utilizing the same.

The present specification inter alia is directed to a modification of and improvement on the cyclone separator described and claimed in Israel Patent No.120,907 and corresponding European patent 971,781.

As described in EP971781, cyclone separators are widely used in industry for dry and wet cleaning of polluted air and can be generally divided into two groups.

The first group is based on imparting vortical motion to the fluid entering the cleaning vessel and separation of the solid particles therefrom by virtue of centrifugal force. This group combines mechanical collectors, e.g., ordinary cyclones, multi cyclones and rotary dust collectors.

The second group is based on filtration of the air or on induced precipitation or gravitational settling of a solid particulate, without, however, involving the fluid within the cleaning vessel into the vortical movement. The industrial equipment relevant to this group includes bag filters and electrostatic precipitators.

The performance of existing particle collectors is evaluated according to the ultimate particle size of the solid particulate which can be separated by a collector.

The mechanical cyclone separators have many advantages; they are versatile, low-cost devices that operate in a continuous mode without the necessity of frequent maintenance measures. These devices have been successfully used for a very long time (as early as 1886), as stand-alone units or in combination with other types of separators.

The main factor affecting the separation of solid contaminants from flue gases in cyclone separators is the velocity of the gaseous phase or its acceleration which is a function of the velocity. Two main forces affect a particle moving in a rotating flow. These forces are a centrifugal force and a drag force along the line of flow. The centrifugal force, $F_c$, is proportional to the particle mass $m_p$ and to the square of the tangential velocity, $V_t$, of the particle or of the spinning gas which are almost the same and is inversely proportional to the radius of curvature, r, of the particle trajectory according to the formula:

$$F_c = m_p V_t^2 / r \qquad (1)$$

The velocity of the spinning gas flow is assumed to have only a tangential component, and this type of flow is usually of the form:

$$V_t r^n = const \qquad (2)$$

Typical velocities in high efficiency cyclones are about 15 - 20 m/sec.

These velocities were found to be insufficient for removing very small sizes of dust of less than about 10 -20 microns.

Several patents, i.e., SU 1468609; SU 975099; and DE650640 tried to improve the separation of fine dust by cyclone separators, however it should be emphasized that in spite of this, the problems of cost effectiveness and the efficient separation of fine dust, have not been solved.

In EP000971781B1 there is taught a device which dramatically improves the separation of fine dust by cyclone separators, which improvement is achieved by incorporating very effective swirling means of intense vortical motion, said vortical motion being characterized by a linear velocity of the gaseous stream of about 60-100 m/sec, and preferably of about 60-70 m/sec.

Surprisingly, the equipment described in EP000971781B1 has now been found to be very effective even in wet separation, i.e., when adding a liquid to the cyclone separator, for removing fine dust and especially for separating gaseous contaminants such as sulfur dioxide, NOx, and $CO_2$ from a gaseous stream such as flue gas.

It is important to note that it was not self evident that the cyclone separators described in EP 0971781B1 for removal of particulate matter from air and other gases would be effective for the removal of gaseous contaminants, especially sulfur dioxide, from flue gases. In the case of particle removal in a cyclone unit the main objective or challenge is to achieve good separation between the gas phase and the particles by means of physical dynamics. In other words, the objective taught and achieved in said patent was to maximize the difference between the motions of the gas and those of the particles inside the cyclone unit and thereby to achieve separation between these two elements. In contradistinction, in the case of removal of gaseous contaminants, especially sulfur dioxide from flue gases, the main objective is to achieve an effective mixing between the liquid and the gaseous phases, and thereby to achieve an efficient contact between an active element, such as an alkaline compound in the aqueous phase and the sulfur dioxide in the gaseous phase, in order to have higher kinetics.

However, despite the improvements obtainable by using the cyclone separator as described in EP 0971781B1 it has been found that the contact between the liquid and the gaseous streams is still ineffective even when using advanced nozzles.

In addition, to the need in a major improvement in the contact between the incoming liquid and gaseous streams, there is a need for a good separation between these two streams after the contact, in order not to have high content of liquid droplets in the outgoing treated gaseous streams.

Therefore, the problem of producing cyclone units for use in effective wet separation of fine particles and especially of gaseous contaminants has not yet been solved by the prior art, and there is still a need for a new and improved device which will ensure efficient and economical mixing and separation between the two streams, i.e., for wet removal separation of solid and gaseous contaminants such as sulfur dioxide, NOx, and $CO_2$ from flue gases.

Thus the object of the present invention is to provide for a new and improved cyclone unit which will sufficiently reduce and/or overcome the above mentioned drawbacks.

In particular, the main object of the present invention is to provide a new and improved cyclone unit suitable for efficient wet separation of fine particles and especially of gaseous contaminants.

A still further object of the present invention is to provide for a new and improved cyclone unit producing very efficient contact between the gaseous and the liquid incoming streams. Thus, this very efficient contact improves the kinetics of the reaction between the substrates in both phases. As a result, environmental pollution declines by using a reduced amount of chemicals for absorbing the above mentioned contaminants.

A still further object of the present invention is to provide for a new and improved cyclone unit producing very efficient separation between the treated gaseous and liquid outgoing streams after the contact. Thus, this very efficient separation reduces the content of liquid droplets in the outgoing treated gaseous streams.

One of the main challenges in wet scrubbing is to provide an effective contact between the liquid droplets and the gaseous stream. When using known-in-the-art cyclone separators, even by using advanced nozzles, large amounts of the liquid droplets are deposited on the inner walls of the cyclone separator and create a liquid layer that is removed from the surface by gas shear forces and droplets bigger than those produced by the nozzles are generated. The bigger droplets are less effective in removing contaminants from flue gases. Thus, chemical results are far from equilibrium.

The present invention proposes to introduce the liquid stream into an area in which the velocity of the gaseous stream is very high, thus the liquid droplets immediately enter the inner part of the cyclone separator and only a very small proportion of them will deposit on its inner walls or leave the system without contacting the gaseous stream.

This invention is particularly important for cyclone separators, having very effective swirling means which provide for intense vortical motion, being defined by a linear velocity of about 60-100 m/sec compared with known-in-the-art cyclone separators that having linear velocity of about 15 - 20 m/sec.

By introducing the liquid stream into an area where the velocity of the gaseous stream is very high, larger amounts of the liquid droplets enter the inner part of the cyclone separator. Thus this system is characterized by a contact between the liquid droplets and the gaseous stream which is much longer and thus extremely effective.

Another important challenge in wet scrubbing is to provide an effective separation between the treated gaseous and liquid outgoing streams after the contact.

In order to achieve this objective the present invention provides an improved cyclone unit comprising a kind of a barrier tool and/or, slit openings inside said cyclone, enabling said treated liquid to exit said unit in a predetermined direction while hindering said treated gaseous stream from flowing with it and instead directing said gaseous stream in a different direction.

Disclosure of the Invention

Thus the present invention provides a cyclone unit for the removal of contaminants from flue gases by combination of a gaseous stream with an aqueous stream as defined in claim 1.

Preferably, said aqueous streams are injected by nozzles into said passages.

In preferred embodiments said swirling means is formed as a cylindrical ring provided with a plurality of spaced apart slit-like elongated openings forming said passages

In said other preferred embodiments, preferably said passages are formed by drilling said swirling means.

In especially preferred embodiments of the present invention there is provided a cyclone unit wherein the velocity of said gaseous stream inside said cyclone unit is between 20m/sec and 120 m/sec., and preferably between 60m/sec and 100 m/sec.

In a further aspect of the present invention said housing is formed as a hollow truncated cone, having a large base and a spaced apart small base, the large base thereof being in communication with the lower extremity of said housing, a pipe means being placed within said housing coaxially with the longitudinal axis thereof and constituting said core means wherein an uppermost extremity of the pipe means is located outside of the housing, and a lowermost extremity of said pipe means is located within the housing.

In a preferred embodiment of this aspect, there is provided a plate like tool which is connected inside said hollow truncated cone above said small base of said hollow truncated cone, coaxially with the longitudinal axis of said housing.

In another preferred embodiment of said aspect, said hollow truncated cone contains at least one longitudinal slit-like opening.

In an especially preferred embodiments of this aspect of the invention, said hollow truncated cone is connected to an external envelope means which is partially coating said hollow truncated cone yet leaving a space between them.

While the invention will now be described in connection with certain preferred embodiments in the following figures so that aspects thereof may be more fully understood and appreciated, it is not intended to limit the invention to these particular embodiments. On the contrary, it is intended to cover all alternatives, modifications and equivalents as may be included within the scope of the invention as defined by the appended Claims. Thus, the following figures which include preferred embodiments will serve to illustrate the practice of this invention, it being understood that the particulars shown are by way of example and for purposes of illustrative discussion of preferred embodiments of the present invention only and are presented in the cause of providing what is believed to be the most useful and readily understood description of formulation procedures as well as of the principles and conceptual aspects of the invention.

In the drawings:

Fig. 1 is a schematic presentation of the super cyclone unit in accordance with the present invention.
Fig. 2 is cross-sectional view of Fig. 1 taken along B-B.
Fig. 3 is a perspective view of a swirling means module.
Fig. 4M is a schematic presentation of the hollow truncated cone (12) including said plate like tool (40).
Fig. 4N shows the cross-sectional view of Fig. 4M taken along C-C.
Fig. 5M is a schematic presentation of the hollow truncated cone (12) including said longitudinal slit-like opening (44) and an external envelope means (46).
Fig. 5N shows the cross-sectional view of Fig.5M taken along D-D.
Fig. 6 -8 show cross-sectional view of some swirling means modules.

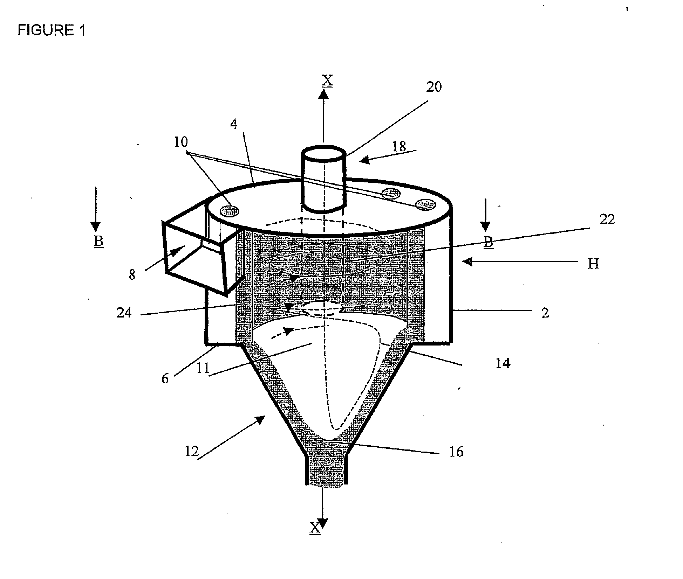

Referring now to Fig. 1 there is seen a cyclone unit according to the present invention comprising: a housing (H) defined by a cylindrical peripheral wall (2) thereof and by upper (4) and lower (6) extremities, said housing having a longitudinal axis (X-X) and being provided with at least one inlet opening (8) for receiving a gaseous stream and a plurality of inlet openings (10) for receiving another fluid such as an aqueous stream thereinto, said unit further comprising at least one outlet means (11) from said housing (H) preferably formed as a hollow truncated cone (12), having a large base (14) and a spaced apart small base (16), the large base thereof being in communication with the lower extremity (6) of said housing (H), said unit further comprising a pipe means (18) placed within said housing (H), preferably coaxially with the longitudinal axis (X-X), wherein an uppermost extremity (20) of the pipe means (18) is located outside of the housing, and a lowermost extremity (22) of said pipe means is located within the housing.

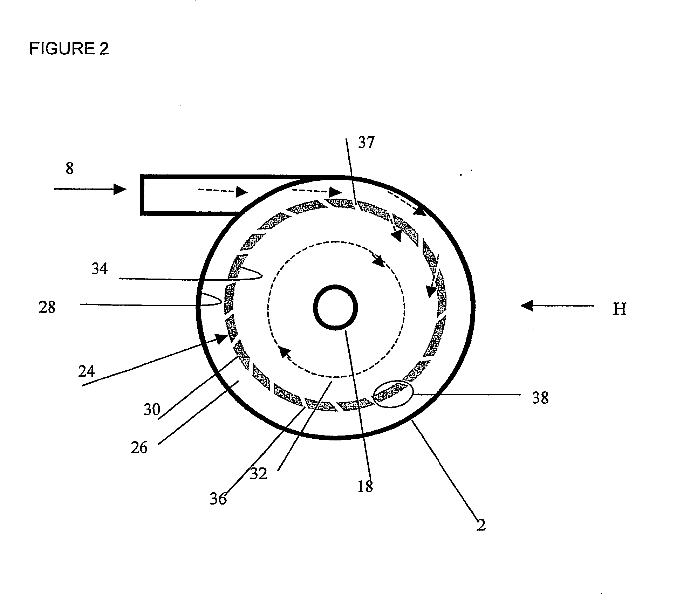

Referring now to Fig. 2 in conjunction with Fig. 1, it can be seen that said cyclone unit further comprises at least one swirling means (24) concentrically positioned and mounted within said housing (H) coaxially with said longitudinal axis (X-X) so as to provide a first annular space (26) between an inner surface (28) of the housing peripheral wall (2) and the outer facing surfaces (30) of said swirling means (24) and to provide a second inner annular space (32) between inwardly facing surfaces (34) of the swirling means (24) and said core element which in the present embodiment is the pipe means (18), said swirling means (24) incorporating a plurality of slit-like elongated openings (36) extending substantially tangentially with respect to said inner annular space (32) so as to enable angular passage from said first annular space (26) towards said second inner annular space (32) wherein said passages (37) are defined by a length, a width and depth dimensions, and wherein the length dimension L exceeds the width dimension, W.

Said cyclone unit is characterized in that said openings (10) for receiving said aqueous stream are located in said upper extremity (4), and are positioned to inject at least most of said aqueous stream into said passages (37).

While not shown, there could be provided a plurality of openings of smaller diameter adjacent said passages in order to assure smaller droplets and openings need not be provided adjacent all the passages.

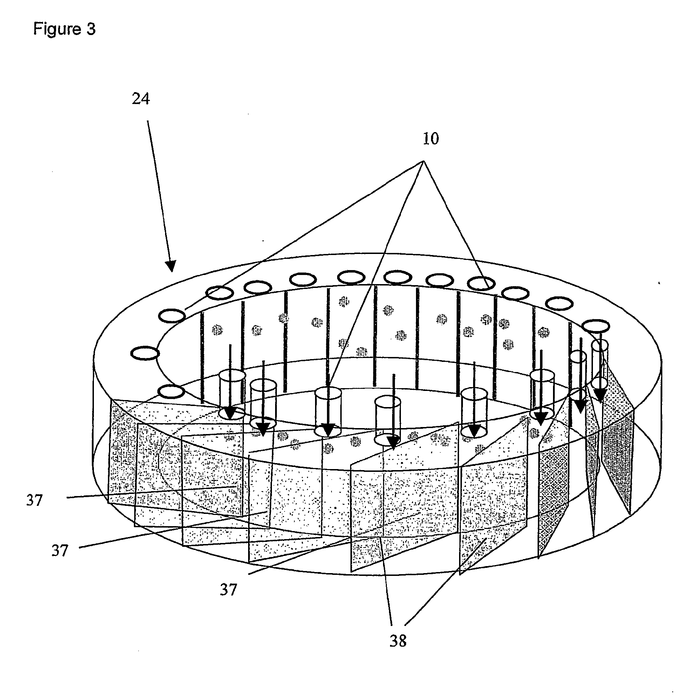

Referring now to Fig. 3, it can be seen that said cyclone swirling means (24) are formed with a plurality of vanes (38), said vanes being arranged regularly along a circular path, tangentially with respect to said circular path and said passages (37) are formed by open spaces between the adjacent vanes (38).

Said openings (10) are preferably associated with nozzles (not shown) which are positioned to inject said aqueous streams into said passageways.

In especially preferred embodiments, said unit is provided with a multiplicity of openings (10) each opening positioned to inject an aqueous stream into an adjacently positioned passageway for intermixing with a gaseous stream flowing therethrough.

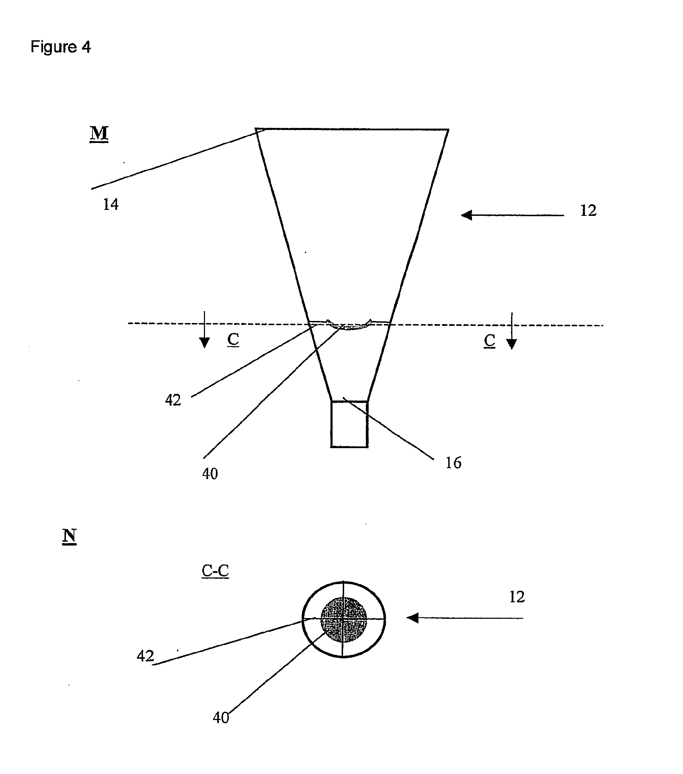

Referring to Fig. 4M and 4N it can be seen that a plate like tool (40) is connected by means of connectors (42) inside said hollow truncated cone (12) above said small base (16) of said hollow truncated cone, coaxially with the longitudinal axis so as to provide a kind of barrier inside said hollow truncated cone (12).

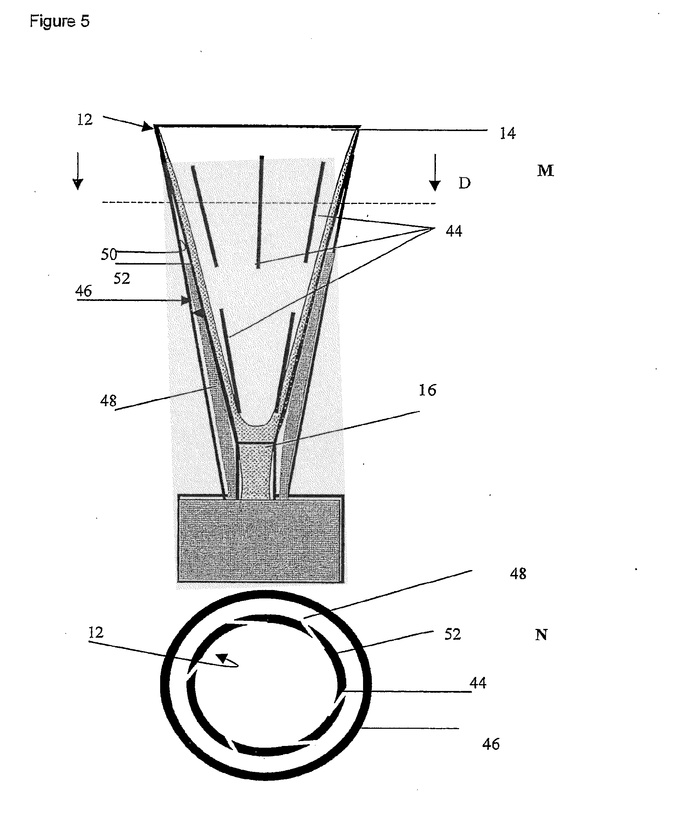

Referring to Fig. 5M and N, it can be seen that said hollow truncated cone (12) contains at least one longitudinal slit-like opening (44) and an external envelope means (46) which surrounds said hollow truncated cone (12) so as to provide for an inner space (48) between the inner wall (50) of said external envelope means and the external wall (52) of said hollow truncated cone.

As a result said treated liquid is exiting said hollow truncated cone through its said small base (16) and in addition, through at least one of longitudinal slit-like openings (44). The treated liquid that exits through at least one longitudinal slit-like opening enters said inner space (48) between said external envelope means (46) and the external wall (52) of said hollow truncated cone, combining with the treated liquid that has exited through said small base (16).

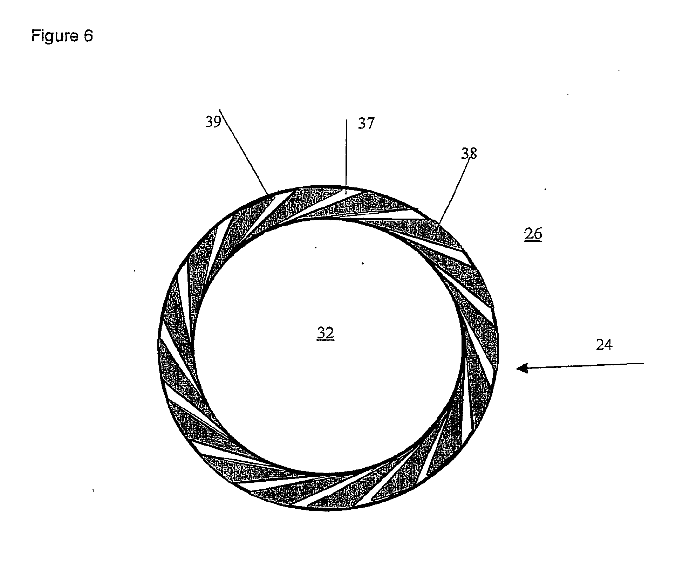

Referring to Fig. 6 to 8 it can be seen that said swirling means (24) can be formed as a cylindrical ring with a plurality of solid segments (38), said segments being arranged regularly along a circular path, preferably tangentially with respect thereto and said passages (37) are formed by open spaces between the adjacent segments. Alternatively, said passages (37) in said swirling means (24) are formed by drilling said cylindrical ring, whereby the solid segments (38) are formed as leftover material between the drilled passages (37).

As will be noted, referring to Fig. 6 to 8, it can be seen that there are variations in the sizes and the shapes of said segments (38) and/or passages (37). These variations allow different angles of the gas flow entering from said first annular space (26) towards said second inner annular space (32) and in addition allow changing the flow area along said passages (37). This variation results in variation in the pressure drop and the energy involved in the gas flow inside said passages.

Thus as seen in Fig. 6, in a preferred embodiment of the invention segments 38 are substantially triangular in shape with an arced base 39 and the passageways 37 are of a similar configuration.

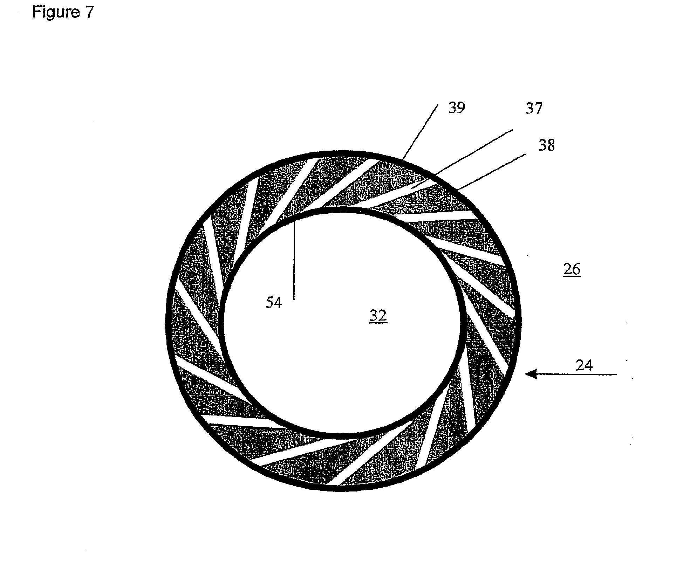

Furthermore as will be seen in Fig. 7, in another preferred embodiment of the invention, the length of the arc of a first end 39 of a segment 38 facing said first annular space 26 is preferably greater than the length of the arc of a second end 54 of a segment 38 facing said second annular space 32, while the outer and inner ends of the passageways 37 are substantially of similar width.

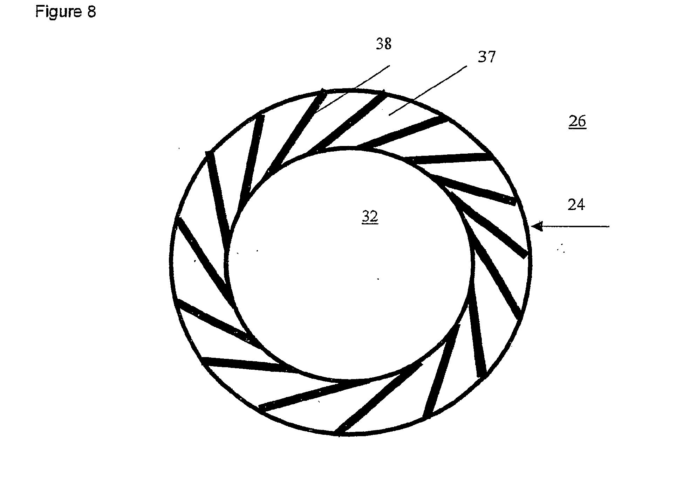

In Fig. 8, in another preferred embodiment of the invention, the length of the outer arc of passageways 37 facing said first annular space 26 are preferably greater than the length of the inner arc of the passageways 37 facing said second annular space 32, while the outer and inner ends of the segments 38 are substantially of similar width.

It will be evident to those skilled in the art that the invention is not limited to the details of the foregoing illustrative embodiments and that the present invention may be embodied in other specific forms. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A cyclone unit for the removal of contaminants from flue gases by combination of a gaseous stream with an aqueous stream, comprising

   a housing (H) defined by a cylindrical peripheral wall (2), by upper (4) and lower extremities (6), and by a core element, said housing (H) having a longitudinal axis (X-X) and being provided with at least one inlet opening (8) for receiving a gaseous stream and a plurality of inlet openings (10) for receiving an aqueous stream thereinto, said cyclone unit further comprising

   at least one swirling means (24) concentrically positioned and mounted within said housing (H) coaxially with said longitudinal (X-X) axis so as to provide a first annular space (26) between an inner surface (28) of the housing peripheral wall (2) and the outer facing surfaces (30) of said swirling means (24) and to provide a second inner annular space (32) between inwardly facing surfaces (34) of the swirling means (24) and said core element

   said swirling means (24) incorporating a plurality of slit-like elongated openings (36) extending substantially tangentially with respect to said inner annular space (32) so as to enable angular passage from said first annular space towards said second inner annular space,

   swirling means (24) are formed with a plurality of vanes (38), said vanes being arranged regularly along a circular path, tangentially with respect thereto and said passages (37) are formed by open spaces between said adjacent vanes (38)

   wherein said cyclone unit is **characterized in that** said openings for receiving said aqueous (10) stream are located in said upper extremity (4), said opening being positioned to inject said aqueous stream into said passages (37).

2. A cyclone unit for the removal of gaseous contaminants from flue gases according to claim 1 wherein said plurality of openings (10) are associated with means for injecting a plurality of aqueous streams into a plurality of passages (37) close to the outlet where the stream velocity is between 20 to 120m/sec

3. A cyclone unit according to claim 1 , wherein the velocity of said gaseous stream inside said cyclone unit is between 20m/sec and 120 m/sec.

4. A cyclone unit according to claim 1 , wherein the velocity of said gaseous stream inside said cyclone unit is between 60m/sec and 100 m/sec.

5. A cyclone unit according to claim 1 further comprising an outlet means (11) from said housing (H) formed as a hollow truncated cone (12), having a large base (14) and a spaced apart small base (16), the large base thereof being in communication with the lower extremity (6) of said housing (H), a pipe (18) means being placed within said housing (H) coaxially with the longitudinal axis (X-X) thereof and constituting said core means wherein an uppermost (20) extremity of the pipe (18) means is located outside of the housing (H), and a lowermost extremity (22) of said pipe (18) means is located within the housing.

6. A cyclone unit according to claim 5, wherein a plate like tool (40) is connected inside said hollow truncated cone (12) above said small base (16) of said hollow truncated cone (12), coaxially with the longitudinal axis of said housing (H).

7. A cyclone unit according to claim 1 , wherein said hollow truncated cone (12) contains at least one longitudinal slit-like opening (44).

8. A cyclone unit according to claim 1, wherein said hollow truncated cone (12) is connected to an external envelope (46) means which is partially coating said hollow truncated cone yet leaving a space between them.

**Patentansprüche**

1. Zykloneinheit zum Entfernen von Verunreinigungen aus Rauchgasen durch Kombination eines gasförmigen Stroms mit einem wässrigen Strom, umfassend

ein Gehäuse (H), das durch eine zylindrische periphere Wand (2), obere (4) und untere Enden (6) und durch ein Kernelement definiert ist, wobei das Gehäuse (H) eine Längsachse (X-X) aufweist und mit mindestens einer Einlassöffnung (8) zum Aufnehmen eines gasförmigen Stroms und mehreren Einlassöffnungen (10 zum Aufnehmen eines wässrigen Stroms hinein ausgestattet ist,

wobei die Zykloneinheit des Weiteren Folgendes umfasst

mindestens eine Wirbelvorrichtung (24), die konzentrisch positioniert und innerhalb des Gehäuses (H) coaxial mit der Längsachse (X-X) montiert ist, um so einen ersten Ringraum (26) zwischen einer Innenfläche (28) der peripheren Wand (2) des Gehäuses und den nach außen gerichteten Flächen (30) der Wirbelvorrichtung (24) bereitzustellen, und um einen zweiten inneren Ringraum (32) zwischen den nach innen gerichteten Flächen (34) der Wirbelvorrichtung (24) und dem Kernelement bereitzustellen

wobei in die Wirbelvorrichtung (24) mehrere schlitzähnliche längsgestreckte Öffnungen (36) integriert, die sich im Wesentlichen tangential mit Bezug auf den inneren Ringraum (32) erstrecken, um so einen winkelförmigen Durchgang von dem ersten Ringraum auf den zweiten Ringraum zu zu ermöglichen,

wobei die Wirbelvorrichtung (24) mit mehreren Schaufeln (38) gebildet ist, wobei die Schaufeln regelmäßig einen kreisförmigen Pfad entlang tangential mit Bezug darauf angeordnet sind und Durchgänge (37) durch offene Räume zwischen nebeneinanderliegenden Schaufeln (38) gebildet werden,

wobei die Zykloneinheit **dadurch gekennzeichnet ist, dass** die Öffnungen zum Aufnehmen des wässrigen (10) Stroms sich in den oberen Enden (4) befinden, wobei die Öffnung positioniert ist, um den wässrigen Strom in die Durchgänge (37) zu injizieren.

2. Zykloneinheit zum Entfernen von gasförmigen Verunreinigungen aus Rauchgasen nach Anspruch 1, wobei die mehreren Öffnungen (10) mit einer Vorrichtung zum Injizieren mehrerer wässriger Ströme in mehrere Durchgänge (37) in der Nähe des Auslasses, wo die Strömungsgeschwindigkeit zwischen 20 und 120 m/sec liegt, assoziiert sind.

3. Zykloneinheit nach Anspruch 1, wobei die Geschwindigkeit des gasförmigen Stroms innerhalb der Zykloneinheit zwischen 20 m/sec und 120 m/sec liegt.

4. Zykloneinheit nach Anspruch 1, wobei die Geschwindigkeit des gasförmigen Stroms innerhalb der Zykloneinheit zwischen 60 m/sec und 100 m/sec liegt.

5. Zykloneinheit nach Anspruch 1, des Weiteren eine Auslassvoruchtung (11) aus dem Gehäuse (H), die als hohler Kegelstumpf (12) gebildet ist, umfassend, der eine große Grundfläche (14) und eine beabstandete kleine Grundfläche (16) aufweist, wobei die große Grundfläche davon in Kommunikation mit dem unteren Ende (6) des Gehäuses (H) steht, wobei eine Rohr- (18) Vorrichtung innerhalb des Gehäuses (H) coaxial mit der Längsachse (X-X) davon positioniert ist und die Kernvorrichtung darstellt, wobei ein oberstes (20) Ende der Rohr- (18) Vorrichtung sich außerhalb des Gehäuses (H) befindet und ein unterstes Ende (22) der Rohr- (18) Vorrichtung sich innerhalb des Gehäuses befindet.

6. Zykloneinheit nach Anspruch 5, wobei ein plattenähnliches Werkzeug (40) innerhalb des hohlen Kegelstumpfs (12) über der kleinen Grundfläche (16) des hohlen Kegelstumpfs (12) coaxial mit der Längsachse des Gehäuses (H) verbunden ist.

7. Zykloneinheit nach Anspruch 1, wobei der hohle Kegelstumpf (12) mindestens eine schlitzähnliche Längsöffnung (44) enthält.

8. Zykloneinheit nach Anspruch 1, wobei der hohle Kegelstumpf (12) mit einer externen Umhüllungs- (46) Vorrichtung verbunden ist, die teilweise den hohlen Kegelstumpf beschichtet, jedoch einen Raum dazwischen frei lässt.

## Revendications

1. Unité de cyclone pour l'élimination de contaminants provenant de gaz de combustion par combinaison d'un courant gazeux avec un courant aqueux, comprenant
un boîtier (H) défini par une paroi périphérique cylindrique (2), par des extrémités supérieure (4) et inférieure (6), et par un élément de noyau, ledit boîtier (H) ayant une axe longitudinal (X-X) et étant doté d'au moins une ouverture d'entrée (8) pour recevoir un courant gazeux et une pluralité d'ouvertures d'entrée (10) pour recevoir un courant aqueux dans celles-ci,
ladite unité de cyclone comprenant en outre
au moins un moyen de tourbillonnement (24) positionné de manière concentrique et monté à l'intérieur dudit boîtier (H) de manière coaxiale par rapport audit axe longitudinal (X-X) afin de fournir un premier espace annulaire (26) entre une surface interne (28) de la paroi périphérique (2) du boîtier et les surfaces externes se faisant face (30) dudit moyen de tourbillonnement (24) et de fournir un second espace annulaire interne (32) entre les surfaces tournées vers l'intérieur (34) du moyen de tourbillonnement (24) et ledit élément de noyau,
ledit moyen de tourbillonnement (24) incorporant une pluralité d'ouvertures en forme de fente allongée (36) se prolongeant sensiblement de manière tangentielle par rapport audit espace annulaire interne (32) afin de permettre le passage angulaire à partir dudit premier espace annulaire vers ledit second espace annulaire interne,
ledit moyen de tourbillonnement (24) est formé avec une pluralité d'aubes (38), lesdites aubes étant disposées régulièrement le long d'une trajectoire circulaire, de manière tangentielle par rapport à celle-ci et lesdits passages (37) sont formés par des espaces ouverts entre lesdites aubes adjacentes (38),
ladite unité de cyclone étant **caractérisée en ce que** lesdites ouvertures pour recevoir ledit courant aqueux (10) sont situées dans ladite extrémité supérieure (4), et lesdites ouvertures sont positionnées de manière à injecter ledit courant aqueux dans lesdits passages (37).

2. Unité de cyclone pour l'élimination de contaminants gazeux provenant de gaz de combustion selon la revendication 1, dans laquelle ladite pluralité d'ouvertures (10) est associée à un moyen pour injecter une pluralité de courants aqueux dans une pluralité de passages (37) à proximité de la sortie où la vitesse du courant est de 20 à 120 m/sec.

3. Unité à cyclone selon la revendication 1, dans laquelle la vitesse dudit courant gazeux à l'intérieur de ladite unité de cyclone est comprise entre 20 m/s et 120 m/s.

4. Unité à cyclone selon la revendication 1, dans laquelle la vitesse dudit courant gazeux à l'intérieur de ladite unité de cyclone est comprise entre 60 m/s et 100 m/s.

**5.** Unité de cyclone selon la revendication 1, comprenant en outre un moyen de sortie (11) dudit boîtier (H) réalisé sous la forme d'un cône tronqué creux (12), ayant une base large (14) et une petite base espacée (16), la base large de l'unité de cyclone étant en communication avec l'extrémité inférieure (6) dudit boîtier (H), un moyen de canalisation (18) étant placé à l'intérieur dudit boîtier (H) de manière coaxiale par rapport à l'axe longitudinal (X-X) de celui-ci et constituant ledit moyen de noyau dans lequel une extrémité supérieure (20) du moyen de canalisation (18) est située en dehors du boîtier (H), et une extrémité inférieure (22) dudit moyen de canalisation (18) est située à l'intérieur du boîtier.

**6.** Unité de cyclone selon la revendication 5, dans laquelle un outil de type plaque (40) est relié à l'intérieur dudit cône tronqué creux (12) au-dessus de ladite petite base (16) dudit cône tronqué creux (12), de manière coaxiale par rapport à l'axe longitudinal dudit boîtier (H).

**7.** Unité de cyclone selon la revendication 1, dans laquelle ledit cône tronqué creux (12) comprend au moins une ouverture en forme de fente allongée (44).

**8.** Unité de cyclone selon la revendication 1, dans laquelle ledit cône tronqué creux (12) est relié à un moyen d'enveloppe externe (46) qui revêt partiellement ledit cône tronqué creux tout en laissant un espace entre eux.

FIGURE 1

FIGURE 2

Figure 3

Figure 4

**M**

14

12

**C**          **C**

42

40

16

**N**

C-C

12

42

40

Figure 5

Figure 6

Figure 7

Figure 8

**REFERENCES CITED IN THE DESCRIPTION**

**Patent documents cited in the description**

- IL 120907
- EP 971781 A
- SU 1468609
- SU 975099
- DE 650640
- EP 000971781 B1
- EP 0971781 B1